Europäisches Patentamt

European Patent Office

Office européen des brevets

(11) Publication number: **0 133 117**
**A2**

(12) **EUROPEAN PATENT APPLICATION**

(21) Application number: **84401525.5**

(22) Date of filing: **19.07.84**

(51) Int. Cl.⁴: **G 06 F 13/12**
**G 06 F 15/16**

(30) Priority: **20.07.83 US 515666**

(43) Date of publication of application:
**13.02.85 Bulletin 85/7**

(84) Designated Contracting States:
**DE FR GB IT NL**

(71) Applicant: **FAIRCHILD CAMERA & INSTRUMENT CORPORATION**
**464 Ellis Street**
**Mountain View California 94042(US)**

(72) Inventor: **Willis, Calvin E.**
**23695 Ravensbury**
**Los Altos California 94022(US)**

(74) Representative: **Chareyron, Lucien et al,**
**Schlumberger Limited Service Brevets c/o Giers 12, place des Etats Unis B.P. 121**
**F-92124 Montrouge Cédex(FR)**

(54) **Independently operable local area network.**

㊿ A data processing system (20) incorporates host processors (22 and 24) connected by network interface units (28 and 34) to a coaxial cable (26). The network interface units (28 and 34), cable (26), and network interface units (40-56) form a local area network capable of carrying out processing operations on information independent of the host processors (22 and 24). As a result, interrupts of the host processors (22 and 24) for data transfer operations are significantly reduced, allowing the system (20) to support a much larger number of user terminals and other peripherals.

FIG. 1

EP 0 133 117 A2

'INDEPENDENTLY OPERABLE LOCAL AREA NETWORK

BACKGROUND OF THE INVENTION

1.Field of the Invention.  This invention relates to a data processing system especially adapted for use in process control applications.  More particulary, it relates to such a data processing system in which certain central processor functions are offloaded to a local area network (LAN) connected to the central processor.

2.  Description of the Prior Art.  There are a wide variety of local area networks and distributed processing systems known in the art.  However, the LANs known in the prior art typically require central processor intervention whenever information transfers occur between a peripheral device and the central processor on a character-by-character basis.

Distributed processing in data processing networks is also known in the prior art, for example, in U.S. Patents 3,979,723 and 4,039,757.  However, such prior art data processing networks are soon limited in the number of input/output devices they can handle in intensive data transfer environments, such as in process control for state-of-the-art integrated circuit manufacturing.

There are a variety of other references disclosing various system configurations particulary adapted for use in various workpiece manipulation manufacturing operations, but such prior art systems are subject to the same I/O device support limitations. Examples of such prior art systems are disclosed in the following issued U.S. Patents: Re 29,685; 3,651,484; 4,093,823; 4,100,601; 4,124,888; 4,124,889; 4,179,212; 4,179,739; 4,181,948; 4,270,167; 4,280,285; 4,298,958; 4,322,854 4,354,268; and 4,371,923.

There are a number of systems disclosed in the prior art which are used for automating a variety of operations in the manufacture of integrated circuits. Examples of such systems are disclosed in the following issued U.S. Patents: 4,044,244; 4,225,225; 4,231,087; 4,313,783; 4,331,702; and 4,364,110. However, there is a need for further development of local area network system design in order to meet the stringent requirements of the integrated circuit manufacturing environment.

SUMMARY OF THE INVENTION

Accordingly, it is an object of this invention to provide a local area network system design which is cabable of carrying out processing operations on information in the network independently of a host system.

It is another object of the invention to provide a data processing system which is capable of supporting a large number of terminals in an intensive transfer of information environment.

It is still another object of the invention to provide such a data processing system which will meet the demands of information handling in a high volume integrated circuit manufacturing environment under control of the data processing system.

The attainment of these and related objects may be achieved through use of the novel local area network and data processing system incorporating the local area network herein disclosed. A local area network in accordance with this invention has a coaxial cable connected to a plurality of network interface units. The network interface units are adapted to be connected to at least one host processor through an additional network interface unit. The network includes a plurality of peripheral devices, each being connected to one of the plurality of network interface units. The network interface units include means for transmitting and receiving information to and from the peripheral devices independently of the host processor. The additional network interface unit includes a direct memory access means connected to the host processor.

An independently operable local area network in accordance with this invention, when connected with at least one host processor, will allow the host processor to service a large number of peripheral devices of widely varying types and protocols. The network desirably uses contention access to the network cable for the peripheral devices. A system of this type will therefore service a large number of users in an intensive information transfer environment. In particular, a system of this type will satisfy the demanding requirements of process control for automated high volume manufacturing of integrated circuits.

The attainment of the foregoing and related objects, advantages and features of the invention should be more readily apparent to those skilled in the art, after review of the following more detailed description of the invention, taken together with the drawings, in which:

## BRIEF DESCRIPTION OF THE DRAWINGS

Figure 1 is a block diagram of a local area network (LAN) data processing system in accordance with the invention.

Figure 2 is a block diagram incorporating the network of Figure 1 with other networks.

Figure 3 is a block diagram showing a protocol for the system of Figure 1.

Figure 4 is a block and flow diagram showing a download transaction with the system of Figure 1.

Figures 5-7 are block and flow diagrams illustrating another type of transaction with the system of Figure 1.

Figure 8 is a block diagram of another portion of the system shown in Figure 1.

Figure 9 is partially a block diagram and partially a flow diagram showing operation of another part of the system shown in Figure 1.

Figure 10 is another partial block diagram and partial flow diagram showing operation of another part of the system shown in Figure 1.

Figure 11 is an interface definition of a portion of the system shown in Figure 1.

# DETAILED DESCRIPTION OF THE INVENTION

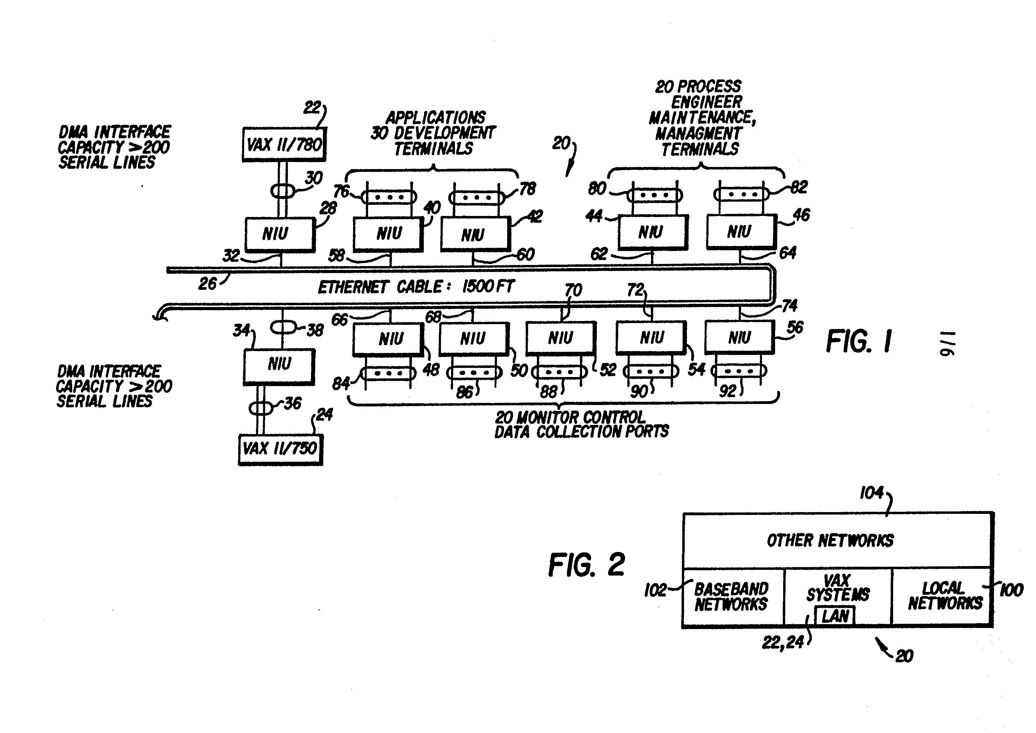

Turning now to the drawings, more particularly to Figure 1, there is shown a representative data processing system 20 for practice of the invention. The system 20 includes a first computer 22 and a second computer 24, connected together by an Ethernet cable 26. As shown, the computer 22 is desirably implemented as a commercially available Digital Equipment Corporation VAX 11/780 system, and the computer 24 is a Digital Equipment Corporation VAX 11/750 system. Network interface unit (NIU) 28 is connected to computer 22 by lines 30 and to Ethernet cable 26 by lines 32. NIU 34 is connected to computer 24 by lines 36, and to the Ethernet cable 26 by lines 38. Lines 30 and 36 are a 32-bit parallel interface, one which software multiplexes a large number of virtual, serial interface connections, up to 4096. Independently of this DMA is used on both sides of the interface.

A wide variety of terminals, other input/output (I/O) devices, and other peripheral devices may be connected to the Ethernet cable 26 by NIUs 40, 42, 44, 46, 48, 50, 52, 54 and 56. The NIUs 40-56 are respectively connected to the Ethernet cable 26 by lines 58, 60, 62, 64, 66, 68, 70, 72, and 74. The NIUs 40-56 are respectively connected to I/O and other peripheral devices by lines 76, 78, 80, 82, 84, 86, 88, 90 and 92. While the lines 76-92 are typically configured in conventional RS-232 format, the nature of the local area network 20 is such that a wide variety of different connection configurations and protocols of the I/O and other peripheral devices can be handled by the NIUs 40-56.

The NIUs 28, 34, and 40-56 are desirably implemented as commercially available Ungermann-Bass NIUs. The system 20 utilizes specialized software that allows the system to handle an aggregate I/O bandwidth of 200,000 bytes/second. The software is implemented in part as firmware in the NIUs 28, 34, 40-56, and in part by programs written in assembly language and in the "C" programming languages downloaded from disks by the VAX computers 22 and 24.

The nature of the network software allows a degree of integration with the VAX/VMS operating system not available in prior art networks. The NIUs 28 and 34 provide a VAX unibus DMA interface, with full microprocessor interface and network control external to the computers 22 and 24. The multiplex nature of this interface is totally transparent to operation of the computers 22 and 24 and to the devices connected through NIUs 40-56. The network system 20 provides powerful distributed I/O related processing at the applicable NIUs 40-56. This capability dramatically reduces the interrupt and I/O processing overhead which would otherwise be incurred with direct interfaces to the computers 22 and 24. As a result, the system 20 will support a far greater number of simultaneously operating communication paths between the computers 22 and 24 and peripheral devices than is otherwise possible, for example, 256 or more such devices, compared with a maximum of 96 such devices using conventional asynchronous VAX RS-232 multiplexers. Such asynchronous multiplexers also support an aggregate I/O bandwidth of only about 8,000 bytes/second, compared with the 200,000 bytes/second obtainable with the system 20.

The LAN of the system 20 provides the reliability, flexibility and performance of a broadcast, baseband, LAN. It increases both the number and type of interfaces to the host computers 22 and 24 in an economical manner. The LAN of the system 20 may utilize IEEE-696 (S-100) bus processor, memory and user interface components, but any other appropriate standard may also be used.

As a result of these features, the LAN of the system 20 realistically supports a far greater number of simultaneously operating communication paths between the host VAX computers than is otherwise possible, i.e., 256 or more such devices. The maximum theoretical limit is 4,096 for such devices, but the practical limit is a few hundred devices.

The LAN interface to the VAX/VMS operating system of the host computers 22 and 24 consists of the hardware interface NIUs 28 and 34, the VAX resident control software, and microprocessor control software. The hardware of the NIUs 28 and 34 may be implemented with a DR11-W direct memory access module on the VAX Unibus connected to an Ungermann-Bass NIU containing a 32-bit parallel I/O module and DR11-W adapter. The NIUs 28 and 34 also contain a processor and memory for the LAN control software described below.

One of the most important features of the system 20 is the availability of its integrated interface with the VAX/VMS operating system. Rather than as an external add-on, the interface functions as an integral part of the VMS system, fully utilizing VMS facilities at all appropriate levels, from the lowest level driver and operating system internals to the highest level, absolutely standard user and process interface. All network software and configuration data is generated on a VAX and stored as standard VMS files. The system manager or other privileged user can use this data to download network software, control network operation, and control all device interface characteristics. The system manager also establishes and restricts user access to network devices using standard VMS commands and utilities. User processes communicate with network devices in exactly the same manner as with directly connected devices.

The network software provides all Ethernet services for the VAX, including network addressing, guaranteed delivery, protocol selection, and data link and physical level Ethernet operation. It also controls all DMA transfers in response to VAX commands, but does not require any enabling condition prior to initiating a control signal exchange with the host processors 22 and 24. A highly efficient control procedure, allows the NIU software to determine the above data given only the 16-bit identification of a previously arranged communication path. Likewise, the same identification allows the network VAX software very rapidly to locate VMS structures required to continue or complete user requests following network transactions.

Combined with the VMS terminal driver emulation described below, the network's DMA transfers, integrated VMS software, and microprocessor communications control eliminate character-by-character VAX interrupts, vastly reduce I/O processing, and permit simultaneous operation of over 200 terminals with an aggregate data rate of nearly 200,000 bytes/sec. In contrast, trivial user processes sending data through the resident VMS terminal driver and DZll serial interface units consume 100% of VAX/780 CPU time at an aggregate data rate of less than 8,000 bytes/sec.

The network provides standard serial and parallel interfaces for terminals and other equipment. It further provides high functionality while minimizing VAX and network overhead through distributed I/O processing.

The network provides the full capabilities and features of the VAX/VMS Terminal Driver as defined by the VAX/VMS I/O User's Guide, except modem support. One familiar with that document and with VMS will recognize the tremendous functionality of this capability. Since this capability is achieved in microprocessor software resident in each appropriate NIU, the network greatly reduces VAX interrupt service and I/O processing overhead as previously described. Standard VMS I/O parameters and data (if any) are transferred

to a terminal NIU 40-56 to initiate a request, and complete, standard I/O status and data (if any) is returned to VMS on completion.

The network provides an NIU-resident microprocessor software implementation of appropriate parts of the Semiconductor Equipment Communications Standard (SECS) protocol. This software handles character handshaking, counts, checksums, and character-level timers, again without requiring VAX character-by-character I/O.

The system 20 has the cabability of enhancement to support direct interface of equipment having an Ethernet controller and complying with the Ethernet physical and data link specification.

The LAN of the system 20 is an Ethernet, complying with the Ethernet physical and data link protocols. Since any general protocol necessarily represents compromise, the LAN neither tolerates nor imposes any protocol tyranny higher than data link level, but instead employs multiple protocols, choosing the most appropriate for specific tasks. For example, a simple, efficient protocol is used to transport VAX terminal traffic on the LAN. A large number of given transport protocols, e.g., Xerox NS, ECMA, Intel, or DEC, might be appropriate for different uses, but the most important factor for choosing the protocol is that some equipment manufacturer of interest is using the protocol. When desired, any transport protocol properly identified by an Ethernet type field value can be accepted and supported on the system 20.

Communication among distant and/or dissimilar networks inevitably requires physical and/or electrical and/or logical translation. Such communication cannot be considered a transparent extension of LAN operation. The system 20 provides internet communication capability without compromising LAN operation by performing compatibility translations only when needed, with gateway processing.

Figure 2 shows how the system 20 may be incorporated in a hierarchical arrangement with other networks. The system 20 may be interfaced both with other local networks 100 and with baseband networks 102 through its host processors 22 and 24. In general, the system 20 may access any external network 104, as long as mutually acceptable protocols are employed.

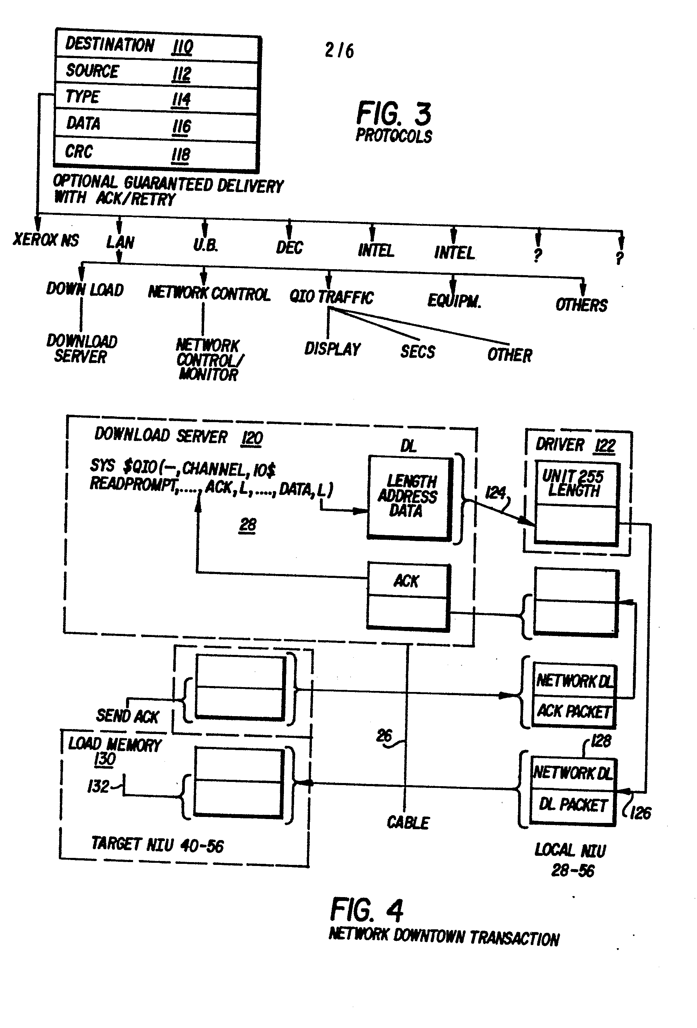

Figure 3 is a block diagram showing the generalized protocol for the system 20 of Figure 1. As shown, any transaction in the LAN of the system 20 must include a destination field 110, a source field 112, a type field 114, information 116 to be transmitted, and a correction field 118. The system includes an optional guaranteed delivery with acknowlege/retry.

Figure 4 shows operations involved in a download transaction involving NIU 28 and one of the local NIUs 40-56 in Figure 1. The NIU 28 includes a download server 120, which receives the download, comprising a length field, an address field, and data to be downloaded, from the host system 22. A driver 122 in the NIU 28 receives the download at 124 and transmits it at 126 through interface 128 to Ethernet cable 26. The download is supplied to the target NIU 40-56, and the data portion of the download is transmitted to memory 130.

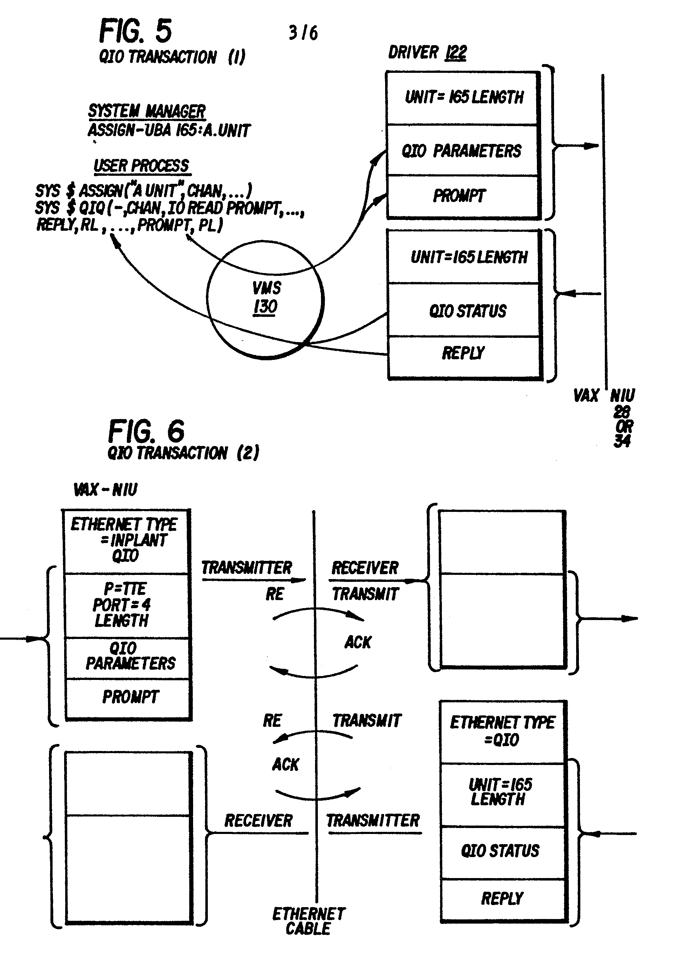

Figures 5,6 and 7 show how Q10 transactions are handled by the system 20 of Figure 1. The VMS 130 of the host processor 22 or 24 transmits Q10 parameters to driver 122 of the NIU 28 or 34, respectively, with a Q10 prompt. The NIU 28 or 34 responds with Q10 status and a reply to the VMS 130.

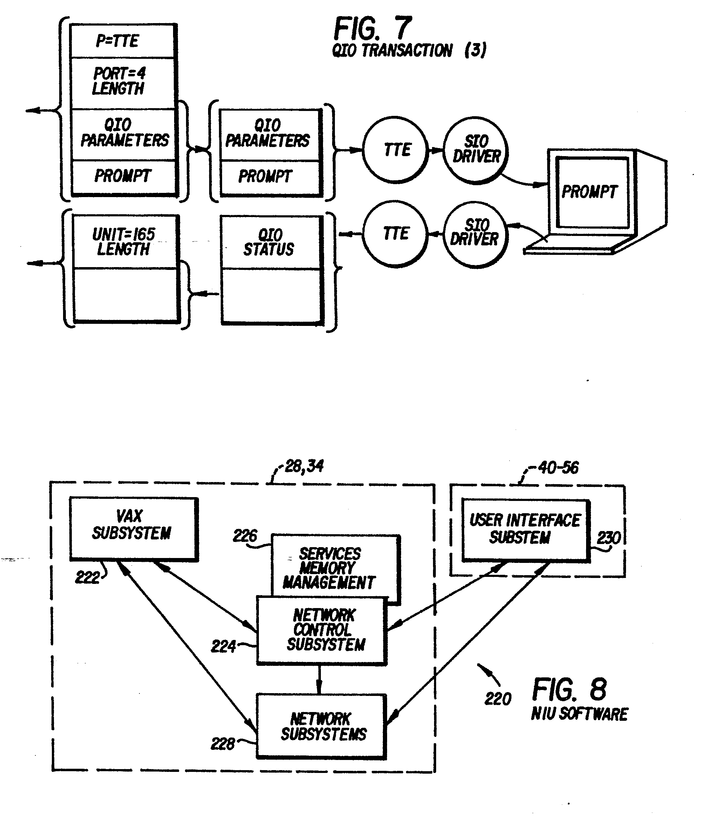

Further details of the NIU software 220 are shown in Figure 8. The NIU software 220 includes a VAX subsystem 222, a network control subsystem 224, services memory management 226, and network subsystems 228, all downloaded to the NIUs 28 and 34. A user interface subsystem 230 is downloaded to each NIU 40-56. The VAX subsystem 222 controls communication to and from the host processors 22 and 24. The network control system 224 controls operation of the NIUs 28 and 34, 40-56 and the Ethernet cable 26 so that these elements operate independently of the host processors 22 and 24, except when the NIUs 28 and 34 access the host processors to upload or download information. The services memory management 226 controls operation of memory resident in the NIUs 28 and 34, through which uploaded and downloaded information passess. No direct communications between the host processors 22 and 24 and the NIUs 40-56. The network subsystems 228 controls communication between the NIUs 28 and 34 and the NIUs 40-56. The user interface subsystem 230 controls communication between each NIU 40-56 and the user devices connected to the system 20 through each of these NIUs.

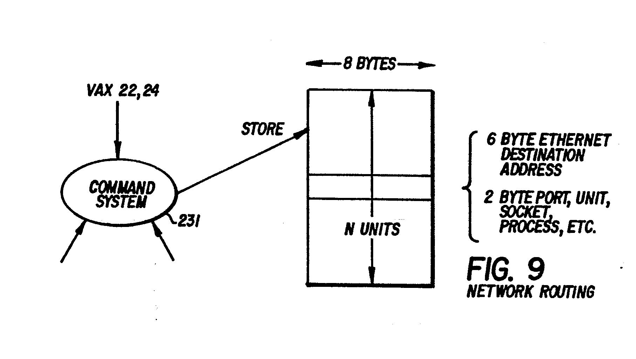

Figure 9 shows the network routing. The host processors 22 and 24 and the network NIUs 40-56 communicate with the command system 231 resident in the NIUs 28 and 34. Memory in the NIUs 28 and 34 stores N units of 8 byte addresses. The addresses include a 6 byte destination address and a 2 byte identifier for a port, unit, socket, process or the like in the network.

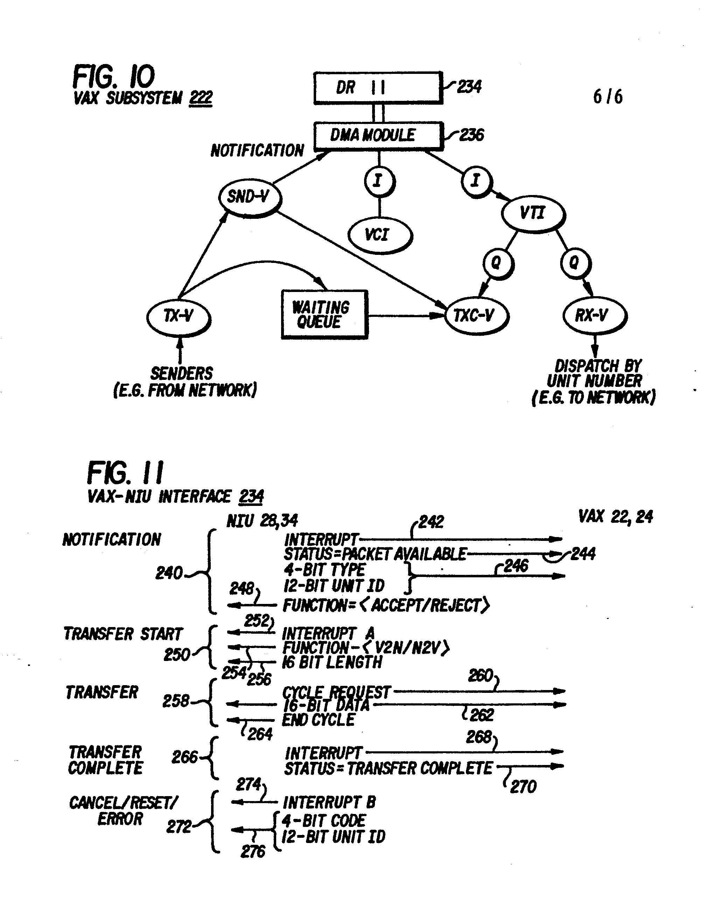

Operation of the VAX subsystem 222 (Figure 8) is shown in Figure 10. A DR11 interface 234 to the host processors 22 and 24 is connected to a DMA module 236. These units are present in each NIU 28 and 34.

Operational details of the DR11 interface 234 are

shown in Figure 11. When a transfer between one of the NIUs 28 or 34 and one of the host processors 22 or 24 is desired, notification signals 240 are sent between the NIU and its host processor. The NIU supplies an interrupt signal 242, a status signal 244, indicating that a packet of information is available, and signals 246 identifying the information by type and unit identification. The host processor 22 or 24 responds with a signal 248 accepting or rejecting the proposed transfer. A series of transfer start signals 250 are supplied by the host processor 22 or 24 to the NIU 28 or 34. The transfer start signals include an interrupt signal 252, a function signal 254, and a 16 bit length defining signal 256. Transfer 258 takes place with a cycle request signal 260 from the NIU to the VAX. 16 bit data signals 262 are then transmitted between the NIU and the VAX, with the direction depending on the direction of transfer. After transmittal of the data signals 262, the host VAX sends an end cycle signal 264. When the transfer is complete, the NIU 28 or 34 sends transfer complete signals 266, consisting of an interrupt signal 268 and a transfer complete signal 270. In the event of a cancel, reset or error, signals 272 consisting of an interrupt signal 274 and bit type and unit ID signals 276 are sent by the host processor 22 or 24 to the NIU 28 or 34.

Further details on the implementation and operation of the invention are provided by the network software program software listings attached as an appendix to this specification and forming a part hereof. Further details on the operation of the system herein described are also found in the above related application, the disclosure of which is hereby incorporated by reference herein.

It should now be readily apparent to those skilled in the art that a network interface unit subsystem, independently operable local area network, and a data processing system incorporating the subsystem and local area network capable of achieving the stated objects of the invention has been provided. The network interface unit subsystem of this invention operates to allow the local area network to carry out processing operations associated with the transfer of information independently of its host system. Because interruption of the host processor for information transfers is minimized, the system of this invention is capable of supporting a much larger number of terminals and other peripheral devices. As a result, the subsystem, local area network and data processing system of this invention is able to meet the information transfer needs of integrated circuit manufacturing under control of the system, and similar other information transfer intensive environments.

It should further be apparent to those skilled in the art that various changes in form and details of the invention as shown and described may be made. It is intended that such changes be included within the spirit and scope of the claims appended hereto.

**WHAT IS CLAIMED IS:**

1. A local area network, characterized by comprising a coax cable connected to a plurality of network interface units, said network interface units being adapted to be connected to at least one host processor through an additional network interface unit, a plurality of peripheral devices, each being connected to one of said plurality of network interface units, said network interface units including means for transmitting and receiving information to and from said peripheral devices independently of the host processor, said additional network interface unit including direct memory access means and being adapted to be connected between said coaxial cable and the host processor.

2. The local area network of Claim 1 in combination with at least one host processor.

3. The local area network of Claim 2 further comprising a second additional network interface unit including direct memory access means, said second additional network interface unit being connected between said coaxial cable and a second host processor in tandem with said first host processor.

4. A local area network interface unit adapted to be connected between a host processor and a cable of the local area network, characterized by including means for carrying out direct memory access to said host processor, and means for transmitting and receiving information to and from peripheral devices coupled to the cable independently of the host processor.

5. The local area network interface unit of Claim 4 in combination with a cable and at least one other network interface unit, said other network interface unit being connected to said cable and being adapted for connection to a peripheral device, said network interface unit and other
network interface unit coacting to transfer to and from the
peripheral device and said network interface unit
independently of the host processor.

DMA INTERFACE CAPACITY >200 SERIAL LINES

22 VAX II/780

APPLICATIONS 30 DEVELOPMENT TERMINALS

20 PROCESS ENGINEER MAINTENANCE, MANAGMENT TERMINALS

20

30

28

76 78 80 82

40 44 46

NIU NIU NIU NIU NIU

32 58 60 62 64

26 ETHERNET CABLE: 1500 FT 70 72 74

34 38 66 68

NIU NIU NIU NIU NIU NIU 56

84 48 86 50 88 52 90 54 92

DMA INTERFACE CAPACITY >200 SERIAL LINES

36 24 VAX II/750

20 MONITOR CONTROL DATA COLLECTION PORTS

FIG. I

1/6

104 OTHER NETWORKS

FIG. 2

102 BASEBAND NETWORKS | VAX SYSTEMS [LAN] | LOCAL NETWORKS 100

22,24 20

0133117

| | |
|---|---|
| DESTINATION | *110* |
| SOURCE | *112* |
| TYPE | *114* |
| DATA | *116* |
| CRC | *118* |

**FIG. 3**
PROTOCOLS

OPTIONAL GUARANTEED DELIVERY
WITH ACK/RETRY

XEROX NS    LAN    U.B.    DEC    INTEL    INTEL    ?    ?

DOWN LOAD    NETWORK CONTROL    QIO TRAFFIC    EQUIPM.    OTHERS

DOWNLOAD
SERVER

NETWORK
CONTROL/
MONITOR

DISPLAY    SECS    OTHER

---

DOWNLOAD SERVER *120*

DL

DRIVER *122*

SYS $QIO(—, CHANNEL, IO$
READPROMPT,....., ACK, L,...., DATA, L)

LENGTH
ADDRESS
DATA

*124*

UNIT 255
LENGTH

*28*

ACK

SEND ACK

NETWORK DL
ACK PACKET

LOAD MEMORY
*130*

*132*

*26*

*128*

NETWORK DL
DL PACKET

*126*

CABLE

TARGET NIU 40-56

LOCAL NIU
28-56

**FIG. 4**
NETWORK DOWNTOWN TRANSACTION

# FIG. 5
## QIO TRANSACTION (1)

3/6

DRIVER 122

SYSTEM MANAGER
ASSIGN-UBA 165:A.UNIT

USER PROCESS
SYS $ ASSIGN("A UNIT", CHAN, ...)
SYS $ QIO (-, CHAN, IO READ PROMPT, ...,
REPLY, RL , ..., PROMPT, PL)

VMS
130

| UNIT = 165 LENGTH |
| QIO PARAMETERS |
| PROMPT |

| UNIT = 165 LENGTH |
| QIO STATUS |
| REPLY |

VAX   NIU
28
OR
34

# FIG. 6
## QIO TRANSACTION (2)

VAX - NIU

| ETHERNET TYPE = INPLANT QIO |
| P=TTE PORT = 4 LENGTH |
| QIO PARAMETERS |
| PROMPT |

TRANSMITTER        RECEIVER
RE                 TRANSMIT
                   ACK

RE        TRANSMIT
    ACK

RECEIVER      TRANSMITTER

| ETHERNET TYPE = QIO |
| UNIT = 165 LENGTH |
| QIO STATUS |
| REPLY |

ETHERNET
CABLE

**FIG. 7**
QIO TRANSACTION (3)

P=TTE

PORT=4 LENGTH

QIO PARAMETERS

PROMPT

QIO PARAMETERS

PROMPT

TTE

SIO DRIVER

PROMPT

UNIT=165 LENGTH

QIO STATUS

TTE

SIO DRIVER

28,34

40-56

VAX SUBSYSTEM

222

226

SERVICES MEMORY MANAGEMENT

224

NETWORK CONTROL SUBSYSTEM

USER INTERFACE SUBSTEM

230

228

NETWORK SUBSYSTEMS

220

**FIG. 8**
NIU SOFTWARE

516

FIG. 9
NETWORK ROUTING

## FIG. 10
### VAX SUBSYSTEM <u>222</u>

DR 11 — 234

DMA MODULE — 236

NOTIFICATION

SND-V

I

I

VCI

VTI

TX-V

WAITING QUEUE

TXC-V

Q

Q

RX-V

SENDERS
(E.G. FROM NETWORK)

DISPATCH BY
UNIT NUMBER
(E.G. TO NETWORK)

## FIG. 11
### VAX-NIU INTERFACE <u>234</u>

NIU 28,34              242          VAX 22, 24

NOTIFICATION

240

INTERRUPT — 242
STATUS=PACKET AVAILABLE — 244
4-BIT TYPE — 246
12-BIT UNIT ID
248
FUNCTION=⟨ACCEPT/REJECT⟩

TRANSFER START

250

252
INTERRUPT A
FUNCTION-⟨V2N/N2V⟩
16 BIT LENGTH
254 256

TRANSFER

258

CYCLE REQUEST — 260
16-BIT DATA
END CYCLE — 262
264

TRANSFER COMPLETE

266

INTERRUPT — 268
STATUS=TRANSFER COMPLETE — 270

CANCEL/RESET/ERROR

272

274
INTERRUPT B
4-BIT CODE
12-BIT UNIT ID
276